# EUROPEAN PATENT APPLICATION

(11) **EP 4 806 948 A1**
(43) Date of publication of application: **16.09.2026**
(21) Application number: 25181278.0
(22) Date of filing: 06.06.2025
(51) Int. Cl.: C08J 9/00, C08J 9/02, C08J 9/08, C08L 1/00

(54) **RESILIENT BACTERIAL NANOCELLULOSE FOAM**

(30) Priority: 11.03.2025 US 202519077010
(71) Applicant: Hong Kong Applied Science and Technology Research Institute Company Limited, Hong Kong (HK)
(72) Inventor: O, Wing Nien Wylie, Hong Kong (HK); CHEN, Xin, Hong Kong (HK); CHENG, Dan, Hong Kong (HK); YAN, GuoZhuangQi, Hong Kong (HK)
(74) Representative: Dr. Gassner & Partner mbB

(57) **Abstract**

A resilient bacterial nanocellulose foam having at least 80 percent biobased carbon content having 0.7% to 1.5% w/w biopolymer of TEMPO-oxidized bacterial nanocellulose or mixtures of TEMPO-oxidized bacterial nanocellulose and an anionic biopolymer The material includes 0.1% to 2% w/w surfactant and 0.3% to 1.5 % w/w crosslinker. The crosslinker may be a divalent metal ion donor such as a metal salt (e.g., calcium salt or a zinc salt, for example, calcium carbonate or zinc carbonate or mixtures). A void-forming agent of 0.3% to 0.9% w/w and 4% to 10% w/w of a resilience-enhancing modifier are added to provide mechanical properties similar to those of commercial polyurethane foams. The resilient bacterial nanocellulose foam has a density of 30 to 182 kg/m³, a tensile strength of 98 to 1195 kPa, and a resilience of 18 to 39%. The TEMPO-oxidized bacterial nanocellulose has a degree of polymerization (DP) of at least 700.

## Description

### FIELD OF THE INVENTION

The present invention relates to resilient foams made from renewable resources and, more particularly, to bacterial nanocellulose foams having mechanical properties comparable to polyurethane foams.

### BACKGROUND

Polyurethane foams are widely employed in the logistics and textile industries. They serve as packaging materials to absorb shock to protect goods from being damaged. In addition, they are used in furniture, bedding, clothing, lingerie such as bra cups, and footwear to provide support and comfort to users. In particular, the shock and vibration damping properties of polyurethane foams are used to cushion and pad the wearer or product. The resilience and compression strength of the foam material are key parameters for these applications.

Polyurethane foams are commercially manufactured from carbon sources originating from petroleum products and are not biodegradable. There are bio-based polyurethane foam products available in the market. For example, extracts from soybeans have been used to create polyurethane foam, for which polyol, a key component for amidation with isocyanates in the polyurethane linkage, is replaced. However, there are increasing concerns, regarding the diversion of food-grade soybeans for non-commercial applications, particularly in the context of the scarcity of food resources in low-income countries.

Isocyanates are obtained by reacting an amine with toxic phosgene. The main drawback of producing isocyanates, in addition to the toxicity of phosgene, relates to using fossil fuels to produce amines. These amines are normally derived from benzene, toluene, ethylene or propylene.

In order to reduce the reliance on non-biodegradable polymers, the 'OK biobased' certification has been launched. The highest level requires the percentage of renewable raw materials (% bio-based) of the product be over 80%, based on the carbon content. There are currently no polyurethane foam products that can fulfill this requirement.

Therefore, there is a need in the art for foam materials that are created from 80% or greater renewable raw materials and that can provide mechanical properties comparable to commercial polyurethane foams. The present invention addresses this need.

### SUMMARY OF THE INVENTION

The present invention relates to foam materials from bacterial nanocelluloses and methods of making these foam materials. The foam materials have similar resilience properties to polyurethane foam and have biobased carbon content over 80%.

In one aspect, the present invention provides a resilient bacterial nanocellulose foam having at least 80 percent biobased carbon content having 0.7% to 1.5% w/w biopolymer of TEMPO-oxidized bacterial nanocellulose or mixtures of TEMPO-oxidized bacterial nanocellulose and an anionic biopolymer. The material includes 0.3% to 0.9% w/w of a void-forming agent, 0.1% to 2% w/w of a surfactant and 0.3% to 1.5 % w/w crosslinker. The crosslinker may be a divalent metal ion donor such as a divalent metal salt (e.g., calcium salt or a zinc salt, for example, calcium carbonate or zinc carbonate or mixtures thereof). 4% to 10% w/w of a resilience-enhancing modifier is added to provide mechanical properties similar to those of commercial polyurethane foams. The resilient bacterial nanocellulose foam has a density of 30 to 182 kg/m³, a tensile strength of 98 to 1195 kPa, and a resilience of 18 to 39%. The TEMPO-oxidized bacterial nanocellulose has a degree of polymerization (DP) of at least 700 to maintain dimensions of the foam such that shrinkage of foam height of the formed foam is less than approximately 30%, nanofibrils with dimension of 5 to 30 microns in length and average diameter of 30 to 50 nm, and comprising 36 to 60% of cellulose in Iβ state.

The surfactant may be a polysorbate-based surfactant, sodium dodecyl sulfate, or mixtures thereof.

The resilience-enhancing modifier may be sorbitol, mannitol, xylitol, glycerol, ethylene glycol, propylene glycol, polyethylene glycol or mixtures thereof.

The TEMPO-oxidized bacterial nanocellulose may have a morphology of nanofibrils of 5 to 30 microns in length and average diameter of 30 to 50 nm.

The TEMPO-oxidized bacterial nanocellulose comprises 36 to 60% cellulose in Iβ state.

The anionic biopolymer may be one or more of pectin, carboxy-methyl cellulose, xanthan gum, gellan gum, and sodium alginate.

The or more divalent metal ions may be calcium ions, zinc ions, or mixtures thereof.

The resilience-enhancing modifier may be one or more of sorbitol, mannitol, xylitol, glycerol, ethylene glycol, propylene glycol, or polyethylene glycol.

The resilience-enhancing modifier may be mixed with alcohol.

The present invention also provides a method for producing a resilient bacterial nanocellulose foam by preparing a dispersion of a TEMPO-oxidized bacterial nanocellulose having a crystallinity of at least 75%, an anionic biopolymer, at least one surfactant, at least one crosslinker, and at least one resilience-enhancing modifier.

A void-forming agent is added to the dispersion to generate carbon dioxide and create a porous structure and a crosslinker ionically crosslinks the TEMPO-oxidized bacterial nanocellulose and the anionic biopolymer.

The TEMPO-oxidized bacterial nanocellulose in the method may have a crystallinity of at least 75%.

The TEMPO-oxidized bacterial nanocellulose may have a cellulose Iα to cellulose Iβ ratio between 40:60 and 65:35.

The anionic biopolymer may be sodium alginate having a viscosity in a range of 200-350 mPa·s in water.

The void-forming agent may be glucono-delta lactone.

The crosslinking of the TEMPO-oxidized bacterial nanocellulose and the anionic biopolymer may be by chelation of calcium ions from the calcium carbonate with carboxylate groups present on the TEMPO-oxidized bacterial nanocellulose and the anionic biopolymer.

The resilient bacterial nanocellulose foam has a density of less than 182 kg/cm³ and exhibits a tensile strength of at least 90 kPa and a compression strength of at least 0.5 MPa.

### BRIEF DESCRIPTION OF THE DRAWINGS

**FIG. 1A** shows the scanning electron microscope (SEM) images of bacterial nanocellulose; **FIG. 1B** shows the SEM images of TEMPO-oxidized bacterial nanocellulose.
**FIG. 2** schematically depicts the hydrolysis of gluco-delta lactone and the formation of carbon dioxide and calcium ions in the composition.
**FIG. 3** schematically depicts the ionic crosslink between sodium alginate and TEMPO-oxidized bacterial nanocellulose described in this invention.
**FIG. 4** shows the appearance of porous composite materials described in this invention.
**FIG. 5** shows the appearance of porous composite materials described in EXAMPLE 15 before, during, and after compression.
**FIGS. 6A-6C** show SEM images of porous composite materials described in this invention before and after 1 and 24 hours of being compressed at 80% along with images of comparative examples.
**FIG. 7** shows the appearance of molded porous composite materials using the composition described in the present invention.

### DETAILED DESCRIPTION

The present invention provides foam materials that are created from 80% or greater renewable raw materials and that can provide mechanical properties comparable to commercial polyurethane foams. In one aspect, the bio-based raw material may include a bacterial nanocellulose and a second material such as sodium alginate.

Bacterial nanocellulose (BNC) is a highly pure form of cellulose synthesized extracellularly by certain bacterial strains, typically from the genera *Komagataeibacter* (formerly *Gluconacetobacter*), *Acetobacter,* and *Sarcina.* These bacteria produce nanocellulose in an aqueous culture medium containing a carbon source such as glucose, sucrose, or glycerol. Among the most commonly used strains, *Komagataeibacter xylinus* (formerly *Gluconacetobacter xylinus*) is widely employed due to its efficient cellulose synthesis. The produced cellulose forms an interconnected network of highly crystalline fibrils with a diameter ranging from 20 to 100 nm, leading to unique mechanical properties, water retention, and biocompatibility. BNC is distinct from plant-derived cellulose in that it is free of lignin and hemicellulose, making it highly pure and structurally uniform. The nanoscale fiber dimensions and hydrogen bonding between fibrils result in an extensive three-dimensional network, conferring high mechanical strength and excellent water retention capacity.

In certain embodiments, the selected bacterial strains comprise *Gluconacetobacter hansenii* (ATCC 53582), *Komagataeibacter xylinum* (ATCC 53524), *Gluconacetobacter xylinus* (ATCC 23767).

In one aspect, the bacterial nanocellulose is obtained by fermentation in the presence of the bacterial strain at approximately 5% v/v concentration, a culture medium, metal salts, carbon source. The culture medium may be a Hestrin-Schramm (H&S) broth, comprising components with 5 g/L peptone, 5 g/L yeast extract, 2.7 g/L sodium hydrogen phosphate, 1.15 g/L citric acid hydrate, and deionized water. The metal salts may be magnesium sulfate (MgSO₄•7H₂O) and iron sulfate (FeSO₄).

The carbon source may be one or more of glucose, fructose and sucrose. As set forth below, industrial scale-up of the carbon source production is needed in order to produce sufficient raw materials for foam production. Consequently, the techniques of the present invention may be used with a variety of carbon sources from waste materials.

### TEMPO-Oxidation of Bacterial Nanocellulose

To enhance the functional properties of bacterial nanocellulose, (2,2,6,6-Tetramethylpiperidine-1-oxyl) (TEMPO) oxidation is widely employed. This selective oxidation process introduces carboxylate functional groups on the surface of cellulose fibrils, improving their hydrophilicity, colloidal stability, and reactivity. The oxidation process is carried out under mild aqueous conditions using the following reagents:
TEMPO radical catalyst
Sodium hypochlorite (NaOCl)
Sodium bromide (NaBr)
Sodium hydroxide (NaOH) for pH control

In this reaction, the primary hydroxyl groups at the C6 position of the cellulose glucose units are selectively oxidized to carboxylate groups (-COO⁻), while preserving the β-1,4-glycosidic backbone of cellulose. The degree of oxidation is tunable by controlling reaction time, pH, and the concentration of oxidation reagents.

The oxidation process modifies the physicochemical properties of BNC, imparting high anionic charge density, enabling strong interactions with positively charged molecules or ions. The resultant nanocellulose further exhibits improved dispersibility in aqueous solutions, facilitating its incorporation into composites along with enhanced hydrophilicity, promoting water retention and gelation. The degree of oxidation can provide tunable mechanical properties. By controlling the crystallinity the nanocellulose's rigidity and structural stability may be increased compared to lower crystallinity nanocelluloses.

Notably, TEMPO-oxidized bacterial nanocellulose (TOBNC) retains a high degree of crystallinity (typically above 75%), distinguishing it from TEMPO-oxidized nanofibrillated cellulose derived from plant sources. This higher crystallinity results in improved dimensional stability, particularly useful for foam applications. Although TEMPO-oxidized cellulose nanofibrils from tree pulp have been used in other foams, they exhibit lower crystallinity (~67%) than TOBNC, leading to a weaker network and more pronounced dimensional shrinkage. The severe contraction during shrinkage leads to a loss of porosity, making it difficult to maintain a low-density structure for plant-based TEMPO-oxidized nanocellulose.

Although TOBNC offers several advantages over traditional plant-based cellulose nanofibrils, challenges remain in fabricating foams. For example, TEMPO oxidation increases hydrophilicity, leading to increased water absorption and capillary-driven dimensional shrinkage during drying. Nanocellulose foams can be brittle due to their rigid hydrogen-bonded network. As such, their mechanical properties cannot duplicate the resilience of conventional polyurethane foams.

To overcome the challenges presented by the poor mechanical properties of TEMPO-oxidized bacterial nanocellulose, the present invention provides a biodegradable foam with improved dimensional stability and mechanical properties by leveraging high-crystallinity TEMPO-oxidized bacterial nanocellulose (TOBNC) combined with a second biopolymer (that is, a polymer from renewable resources). The as-formed TOBNC possesses anionic carboxylate groups introduced via TEMPO oxidation, which can interact with other anionic biopolymers. The addition of ions enables ionic crosslinking, where ions bridge carboxylate groups between both polymers, forming a dynamic and interconnected network. Examples of anionic biopolymers that may be used with the TEMPO-oxidized bacterial nanocellulose include pectin, carboxy-methyl cellulose, xanthan gum, gellan gum, and sodium alginate. These biopolymers may be used individually or in combination in order to create an interconnected network.

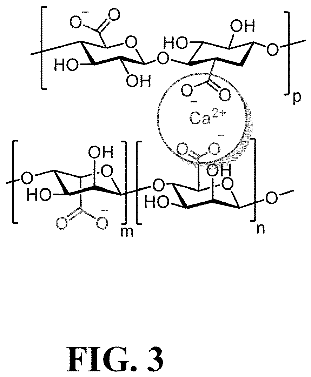

Using divalent metal ions, for example, calcium (Ca²⁺), zinc (Zn²⁺), or other metal ions or mixture of metal ions, the polymer networks may be crosslinked as seen in FIG. 3 for the combination of sodium alginate with TOBNC. The divalent metal ions may be added in the form of metal salts, for example, carbonates, or bicarbonates. Examples include calcium ions from calcium carbonate or zinc ions from zinc carbonate.

The amount of the second biopolymer may be selected to provide a tunable viscosity by altering the degree of substitution of the carboxyl groups. The viscosity of the composite biopolymers affects the final foam formation as it relates to porosity, pore size, and foam resilience and strength. Certain biopolymers, e.g., xanthan gum, exhibit shear thinning behavior which can provide important rheology-modifying properties which may be useful during subsequent processing, for example, foam molding or extrusion.

The combination of a rigid nanocellulose network with a flexible, crosslinked second biopolymer phase results in a material that resists brittle fracture while maintaining structural integrity under mechanical stress. In particular, the ionic crosslinking of a second biopolymer with TOBNC reduces dimensional shrinkage during the drying process by maintaining a stable three-dimensional network, preventing the collapse of the porous structure. In order to further optimize the mechanical properties of the material, resilience-enhancing modifiers can further enhance flexibility and toughness, preventing excessive brittleness in the dried foam. Resilience-enhancing modifiers include sorbitol, mannitol, xylitol, glycerol, ethylene glycol, propylene glycol, or polyethylene glycol. In one embodiment, a combination of glycerol and an alcohol, such as ethanol, may be used.

Surfactants may also be incorporated to adjust viscosity and assist in foam stabilization. The surfactant may be selected from non-ionic surfactants, anionic surfactants, or combinations thereof, depending on the desired interaction with the biopolymer matrix and processing conditions. Suitable non-ionic surfactants include polysorbate-based surfactants such as polysorbate 20 (Tween 20), polysorbate 40 (Tween 40), polysorbate 60 (Tween 60), and polysorbate 80 (Tween 80), which are ethoxylated sorbitan esters capable of stabilizing emulsions and reducing interfacial tension. Anionic surfactants contribute to dispersion and wetting properties by imparting negative surface charge to the composition. Suitable anionic surfactants include sodium dodecyl sulfate (SDS), sodium lauryl sulfate (SLS), and sodium stearoyl lactylate (SSL). In one embodiment, a combination of polysorbate 20 (Tween 20) and sodium dodecyl sulfate may be used.

In order to create foams from the TOBNC or TOBNC/second biopolymer composite material, a void-forming system is used. The void-forming system facilitates the generation of gas within the biopolymer matrix, resulting in expansion and the formation of a lightweight, porous structure. Suitable void-forming systems include compounds that release gas upon reaction with acids or bases and void forming agents such as lactone-based agents.

In certain embodiments, the void-forming agent comprises a lactone-based compound that hydrolyzes to release acid over time, thereby promoting controlled void forming. Suitable lactone-based void-forming agents include glucono-delta-lactone. GDL is a cyclic ester which can be hydrolyzed in water to gluconic acid and induce lowering of pH in the medium.

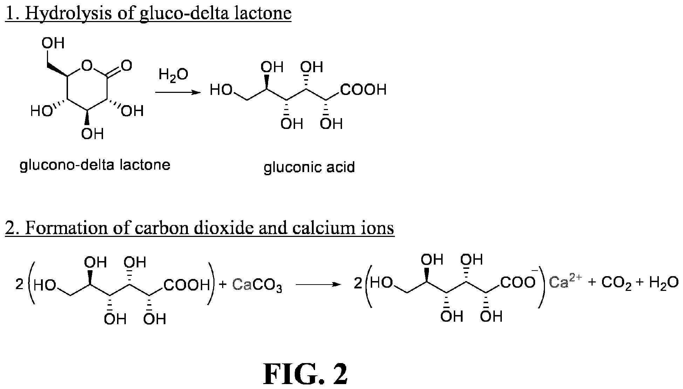

In one embodiment formation of voids with carbon dioxide may be accomplished by using a system of glucono-delta lactone (GDL) void forming agent and a calcium carbonate crosslinker that also functions as the compound that release gas upon reaction with acids or bases. Calcium carbonate is neutralized by gluconic acid to generate carbon dioxide and calcium ions as shown in the reactions of FIG. 2. The calcium ions are crosslinking agents for TEMPO-oxidized bacterial nanocellulose via ionic crosslinking, for which the carboxylate groups of the biopolymers chelate calcium ions.

Currently, BNC production remains limited to specialty applications, such as medical materials or wound dressings. As BNC is a major component of the bio-based foams of the present invention, large-scale production of bacterial nanocellulose (BNC) must be further developed to realize the potential to replace conventional polyurethane foams. To this end, the development of efficient bioreactors, low-cost fermentation methods, and optimized processing techniques will be critical to making the TOBNC-based foams of the present invention commercially viable for green packaging and eco-friendly material applications.

To meet the production demands for foam applications, improvements in bioreactor designs are necessary to increase BNC yield, reduce processing time, and lower production costs. The following reactor technologies are promising for large-scale BNC production:
Agitated Bioreactors - Conventional stirred-tank reactors (STRs) can be adapted to grow cellulose-producing bacteria in controlled environments with optimized agitation to balance oxygen transfer and mechanical shear.
Airlift Bioreactors - These systems provide improved oxygenation without excessive shear stress, allowing for high-yield BNC production with minimal fibril damage.
Rotating Disk Bioreactors - By providing a continuously refreshed air-liquid interface for bacterial growth, these systems enhance oxygen diffusion and increase cellulose productivity, which is important for industrial-scale manufacturing.
Continuous Culture Systems - Instead of traditional batch processing, continuous bioreactors with controlled harvesting and renewal of culture medium can sustain higher productivity and reduce production downtime.
Commercialization of TOBNC foams for green packaging and eco-friendly material applications requires reducing production costs by shifting from high-purity glucose to more economically viable feedstocks. Potential low-cost carbon sources include:
   Agricultural waste byproducts (e.g., molasses, lignocellulosic hydrolysates, spent brewer's grain)
   Food industry waste streams (e.g., fruit peels, sugarcane bagasse)
   Glycerol from biodiesel production. These sources not only lower raw material costs but also contribute to a circular economy by upcycling industrial waste into value-added bioproducts.

In a particular foam embodiment, a TEMPO-oxidized bacterial nanocellulose composite is formed with sodium alginate and crosslinked to create a strong and resilient foam with properties comparable to polyurethane foam. Importantly, the resilient bacterial nanocellulose foam is at least 80 percent biobased carbon content, meeting the "biobased" product certification. The foam may be 0.7% to 1.5% w/w biopolymer of TEMPO-oxidized bacterial nanocellulose or mixtures of TEMPO-oxidized bacterial nanocellulose and sodium alginate. The material includes 0.3% to 0.9% w/w of a void-forming agent such as glucono-delta lactone.

The material includes 0.1% to 2% w/w of a surfactant and 0.3% to 1.5 % w/w crosslinker which may be calcium carbonate, zinc carbonate and their mixtures. 4% to 10% w/w of a resilience-enhancing modifier is added to provide mechanical properties similar to those of commercial polyurethane foams. The resilient bacterial nanocellulose foam has a density of 32 to 182 kg/m³, a tensile strength of 98 to 1195 kPa, and a resilience of 18 to 39%. The TEMPO-oxidized bacterial nanocellulose has a degree of polymerization (DP) of at least 700 to maintain dimensions of the foam such that shrinkage of foam height of the formed foam is less than approximately "30%", nanofibrils with dimension of 5 to 30 microns in length and average diameter of 30-50 nm, and comprising 36 to 60% of cellulose in Iβ state. The term "shrinkage of less than approximately 30%" relates to a foam shrinkage test in which a cubic volume of foam has its height reduced by approximately 30% or less following drying as set forth in Example 3.

### EXAMPLE 1: Formation of bacterial nanocellulose

Bacterial strain ATCC 53582 at 5 % v/v concentration (inoculated for 24 h) was loaded into an H&S broth (445 mL), 0.04 % w/w MgSO₄•7H₂O, 0.0005% w/w FeSO₄, and 20 g/L of glucose at pH 5 that were previously autoclaved. The mixtures were then discharged to petri dishes with a ratio of the area of exposed surface (890 cm²) to the volume of culture medium of 2, and were statically incubated. The bacterial nanocellulose pellicles that were grown were isolated after 5 days of fermentation at 30 degrees Celsius. They were purified by washing with 1 wt% sodium hydroxide in water at 90 degrees Celsius for 1 hour, and washed further until the washings became pH neutral. The average dried weight of bacterial nanocellulose obtained was 6.19 ± 0.15 g/L for 3 batches.

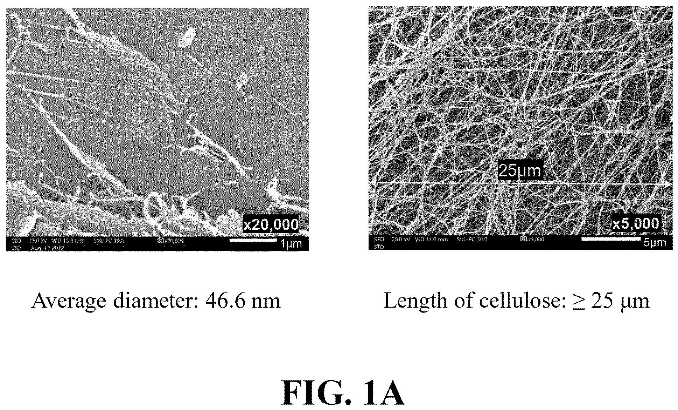

The formed bacterial nanocellulose are nanofibrils having diameter of 46.6 nm and fiber lengths over 20 microns according to SEM as seen in FIG. 1A. They have a composition of cellulose of Iα state at 68.5%, cellulose of Iβ at 23%, with overall crystallinity at 64.2%.

The bacterial nanocellulose have a degree of polymerization from 724 to 747.

### EXAMPLE 2: TEMPO oxidation of bacterial nanocellulose

The bacterial nanocellulose of Example 1 are activated by selectively oxidizing hydroxy groups in cellulose units to carboxylic acid groups using the TEMPO process. The preparation of TEMPO-oxidized bacterial nanocellulose is according to the following process overview: 1) homogenize the suspension of bacterial nanocellulose in water; 2) mix bacterial nanocellulose suspension (0.7%w/w) in water with TEMPO (0.1 mmol/L) and sodium bromide (1 mmol/L); 3) slowly adding sodium hypochlorite (6 mmol/L) to the suspension with stirring, and maintain pH at 10 with sodium hydroxide; 4) quenching the reaction by adding ethanol; 5) collect TEMPO-oxidized bacterial nanocellulose by centrifugation, and washed with ethanol and water.

TEMPO-oxidized bacterial nanocellulose that are obtained using bacterial nanocellulose obtained from Example 1 have composition of cellulose of Iα state at 41.7%, cellulose of Iβ state at 58.3%, and overall crystallinity of 76.8%.

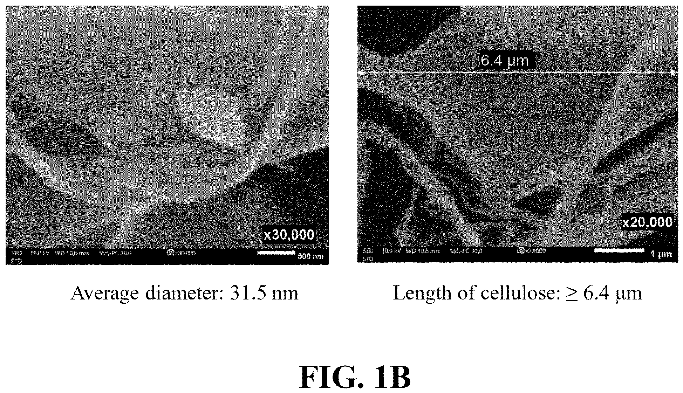

The morphology of the formed TEMPO-oxidized bacterial nanocellulose is nanofibrils having an average diameter of 31.5 nm and lengths over 6.4 microns as seen in FIG. 1B and degree of polymerization at 709.

Table 1 depicts the properties of the bacterial nanocellulose and the TEMPO-oxidized bacterial nanocellulose of Examples 1 and 2.

The composition of cellulose in either Iα or Iβ state is determined through X-ray diffraction analysis. The degree of polymerization is evaluated using the methods outlined in Appendix B of China Industrial Standard GB/T 9107-2023, employing copper ethylenediamine solution as the solvent, the disclosure of which is incorporated by reference herein.

### EXAMPLE 3: Formation of TOBNC-based foams

The TEMPO-oxidized bacterial nanocellulose of Example 2 is formed into a composite, crosslinked material with sodium alginate as the selected second biopolymer.

The foams are formed from the following materials with particular composition components set forth in Tables 2 and 3.
TEMPO-oxidized bacterial nanocellulose
Biopolymer: sodium alginate having a viscosity in a range of 200-350 mPa·s in water Surfactant: Tween 20 and/or sodium dodecyl sulfate
Resilience-enhancing modifier: glycerol and ethanol
Cross-linker: calcium carbonate
Void-forming agent: glucono-delta lactone

The materials of the Examples are formed into a foam according to the following overview process. A homogeneous aqueous dispersion of TEMPO-oxidized bacterial nanocellulose was pre-heated at 50°C, followed by addition of anionic biopolymer/sodium alginate until completely dissolved. The calcium carbonate cross-linker and surfactants (Tween 20/polysorbate 20 or SDS) were added to the mixtures with vigorous stirring for 1 hour. The glucono-delta lactone void former was then added while mixing for 15 minutes, and the mixture was placed in a mold to stand for at least 2 hours. The resulting composite was soaked in water first, then with a mixture of glycerol and ethanol in water for 6 hours, and cured at 60°C until completely dried. The various ingredient percentages for the Examples and the Comparative Examples are set forth in Tables 2 and 3.

**TABLE 1 Properties of TOBNC**

| Cellulose | Degree of Polymerization | Overall Crystallinity (%) | Composition of Cellulose Iα (%) | Composition of Cellulose Iβ (%) |
|---|---|---|---|---|
| Bacterial nanocellulose | 724 - 747 | 64.2 | 68.5 | 23 |
| Cellulose nanofibrils | 805 | 67 | 70.6 | 29.4 |
| TEMPO-oxidized Bacterial nanocellulose | 709 | 76.8 | 41.7 | 58.3 |
| TEMO-oxidized Cellulose nanofibrils | 763 | 67.7 | 62.1 | 37.9 |

**TABLE 2**

| Components* | | Composition in water (%) | | | | | | |
|---|---|---|---|---|---|---|---|---|
| | | COMPARATIV E EXAMPLE 4 | COMPARAIVE EXAMPLE 5 | COMPARATIVE EXAMPLE 6 | COMPARATIVE EXAMPLE 7 | EXAMPLE 8 | EXAMPLE 9 | EXAMPLE 10 |
| Nanocellulose | Bacterial nanocellulose | - | - | 0.7 | - | - | - | - |
| | Cellulose nanofibrils | - | 0.7 | - | - | - | - | - |
| | TEMPO- oxidized Bacterial nanocellulose | - | - | - | - | 0.7 | 1.12 | 0.28 |
| | TEMO-oxidized Cellulose nanofibrils | - | - | - | 0.7 | - | - | - |
| Biopolymer | Sodium Alginate | 1.4 | 0.7 | 0.7 | 0.7 | 0.7 | 0.28 | 1.12 |

| Physical Properties of Foam | | | | | | | | |
|---|---|---|---|---|---|---|---|---|
| Density (kg/m3) | | 73.8 | 77.1 | 76.8 | 34 | 30.8 | 182 | 55 |
| Dimensional shrinkage upon curing at 60°C (L/W/H, %)** | | 20/20/26 | 35/41/64 | 17/18/44 | 18/21/37 | 17/20/26 | 17/17/20 | 20/22/41 |
| Tensile Strength - ISO 37 (KPa) | | 276 | 322 | 147 | 112 | 113 | 1195 | 424 |
| Compressive Strength at 50%/80% (MPa) | | 0.83/7.47 | 0.68/4.60 | 0.453/1.94 | 0.94/4.43 | 0.93/3.99 | 2.15/12.3 | 1.67/18.6 |
| Deformation upon compression at 50%/80% (%) | | 8.8/18 | 36/74 | 32/38 | 10/14 | 7.8/10 | 15/43 | 8.3/58 |
| Resilience - ASTM D3574 (%) | | 40.4 | 21.7 | 23.9 | 38.2 | 31.6 | 18.5 | 29.3 |

| | | | | | | | | |
|---|---|---|---|---|---|---|---|---|
| *Along with sodium dodecyl sulfate (0.1%) as surfactant, glycerol (7%) and ethanol (60%) in water as resilience-enhancing modifier, glucono-delta lactone (0.6%) as void-forming agent and calcium carbonate (0.3%) as crosslinker **L/W/H = Length/Width/Height | | | | | | | | |

**TABLE 3**

| Components* | | Composition in water (%) | | | | | | |
|---|---|---|---|---|---|---|---|---|
| | | EXAMPLE 8 | EXAMPLE 11 | EXAMPLE 12 | EXAMPLE 13 | EXAMPLE 14 | EXAMPLE 15 | |
| TEMPO-oxidized Bacterial nanocellulose | | 0.7 | 0.7 | 0.7 | 0.7 | 0.7 | 0.7 | COMPARATIVE EXAMPLE 16 |
| Biopolymer | Sodium Alginate | 0.7 | 0.7 | 0.7 | 0.7 | 0.7 | 0.7 | |
| Surfactant | Sodium dodecyl sulfate | 0.1 | 0.1 | 0.1 | - | - | - | POLY-URETHANE FOAM |
| | TWEEN 20 | - | - | - | 1 | 0.5 | 2 | |
| Resilience-enhancing modifier | Glycerol in water | 7 | 4 | 10 | 7 | 7 | 7 | |
| | Ethanol in water | 60 | 60 | 60 | 60 | 60 | 60 | |

| Physical Properties of Foam | | | | | | | | |
|---|---|---|---|---|---|---|---|---|
| Density (kg/m3) | | 30.8 | 22.5 | 36.5 | 48 | 136 | 70.8 | 39.9 |
| Dimensional shrinkage upon curing at 60°C (L/W/H, %)** | | 17/20/26 | 17/21/26 | 19/29/19 | 22/24/57 | 25/29/76 | 22/23/46 | - |
| Tensile Strength - ISO 37 (KPa) | | 113 | 101 | 98 | 177 | 728 | 485 | 121 |
| Compressive Strength at 50%/80% (MPa) | | 0.93/3.99 | 0.74/2.5 | 1.11/6.02 | 1.41/13.4 | 2.35/61.4 | 1.38/9.68 | 0.027/0.296 |
| Deformation upon compression at 50%/80% (%) | | 7.8/10.6 | 24.9/58.4 | 9.7/45 | 2.2/1.7 | 9.6/17.4 | 7.1/7.4 | - |
| Resilience - ASTM D3574 (%) | | 31.6 | 18.8 | 38.5 | 29.1 | 24.8 | 23.9 | 17 |

| | | | | | | | | |
|---|---|---|---|---|---|---|---|---|
| *Along with glucono-delta lactone (0.6%) as void-forming agent and calcium carbonate (0.3%) as crosslinker **L/W/H = Length/Width/Height | | | | | | | | |

### TECHNICAL EFFECTS OF THE PRESENT INVENTION

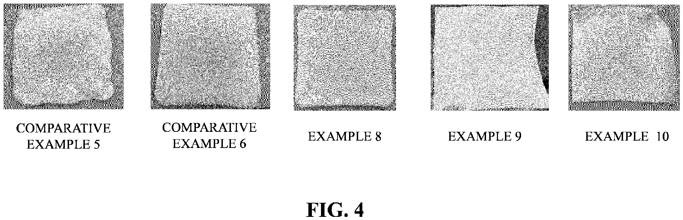

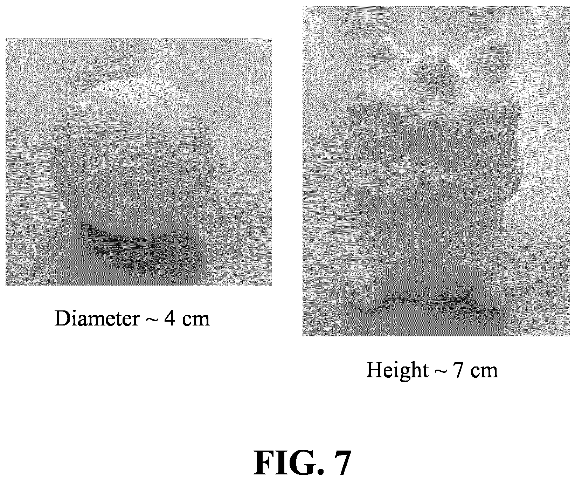

FIGS. 4-7 show photographs of foams formed according to the Examples and Comparative Examples that demonstrate the technical effects of the present invention, particularly relating to foam pores and compression of the foams as well as molded shapes of the foams. Bacterial nanocellulose and TEMPO-oxidized bacterial nanocellulose are advantageous over the use of cellulose nanofibrils obtained from tree pulps. In particular, TEMPO-oxidized bacterial nanocellulose described in the invention has a higher degree of crystallinity (76.8%) over TEMPO-oxidized cellulose nanofibrils (67.7%), with different compositions of cellulose Iα and Iβ states (41.7% and 58.3%, respectively for TEMPO-oxidized bacterial nanocellulose; 62.1% and 37.9%, respectively for TEMPO-oxidized cellulose nanofibrils). The higher percentage of cellulose Iβ in TEMPO-oxidized bacterial nanocellulose (58.3%) over TEMPO-oxidized cellulose nanofibrils (37.9%) is advantageous for the bio-based bacterial form composition which requires flexibility.

The higher degree of crystallinity in TEMPO-oxidized bacterial nanocelluose in EXAMPLE 8 provides a rigid network to reduce dimensional shrinkage from foaming process, in contrast to the use of TEMPO-oxidized cellulose nanofibrils in COMPARATIVE EXAMPLE 7. (Dimensional shrinkage of foam height 26% vs 37%) Therefore, a low-density porous material (30.8 kg/m³ vs 34.0 kg/m³, EXAMPLE 8 vs COMPARATIVE EXAMPLE 7) with sufficient tensile and compressive strength and resilience can be preserved.

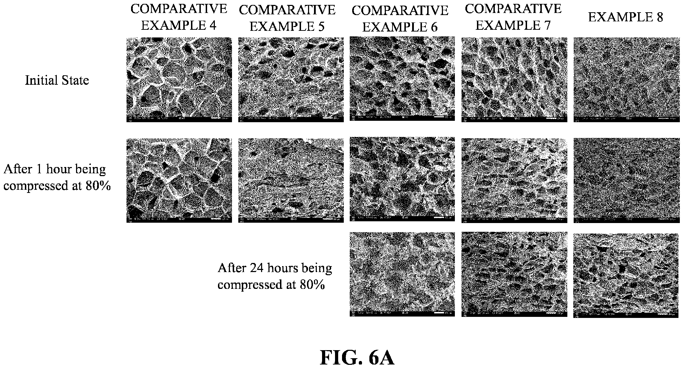

Further, the use of TEMPO-oxidized bacterial nanocellulose is advantageous over the use of cellulose nanofibrils and bacterial nanocellulose in this invention as the dimensional shrinkage upon foaming process is much significant, as evident in COMPARATIVE EXAMPLES 5 and 6 and EXAMPLE 8 (of foam height, shrinkage at 64% vs 26%, 44% vs 26%, respectively) and FIG. 4. In addition, deformation upon compression is significant when cellulose nanofibrils and/or bacterial nanocellulose is used. FIG. 6A shows that the pores of the materials has been deformed upon compression at 80% while FIGS, 6B-6C show the pores of the materials of the present invention having good pore recovery following compression. FIG. 4 shows the macroscopic properties of the foams of the present invention vs. those of the comparative examples; the comparative example foams have poor shape recovery on a macroscopic level following foam compression while those of the present invention recover their initial shape.

The use of 1.4% sodium alginate in the composition allows formation of porous material with density of 73.8 kg/m³. The use of 0.7% sodium alginate in the composition did not lead to the formation of a porous material, however. The use of sodium alginate along with certain percentage of TEMPO-oxidized bacterial nanocellulose in the composition is advantageous to provide porous materials with density below 36.5 kg/m³. The use of 0.7% or 1.4% TEMPO-oxidized bacterial nanocellulose in the composition alone did not lead to formation of a foam material.

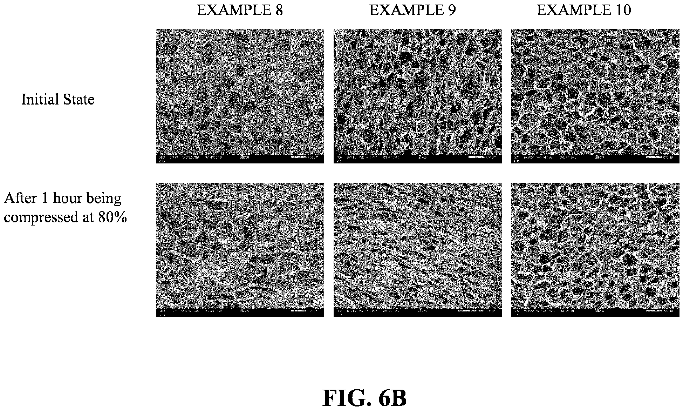

The use of TEMPO-oxidized bacterial nanocellulose provides high tensile properties and compression strength in the porous materials that formed, as in EXAMPLE 9 with tensile strength improved to 1195 KPa. Deformation upon compression, however, is significant when the mass ratio of TEMPO-oxidized bacterial nanocellulose to sodium alginate is 4:1 (as opposed to 1:1 in EXAMPLE 8). FIG. 6B shows that the pores of the materials have been deformed upon compression at 80%. When TEMPO-oxidized bacterial nanocellulose suitability crosslinked with sodium alginate that are present in the composite, sodium alginate provides flexibility to the composite that formed.

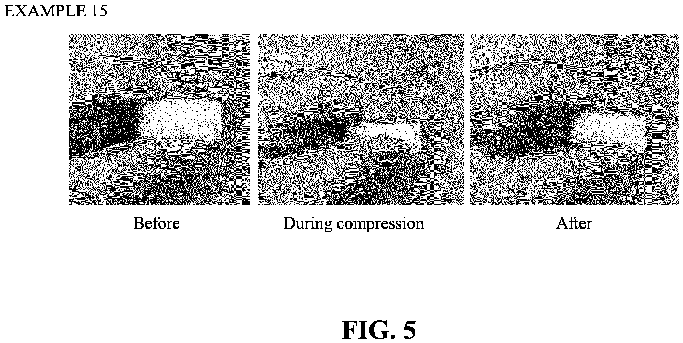

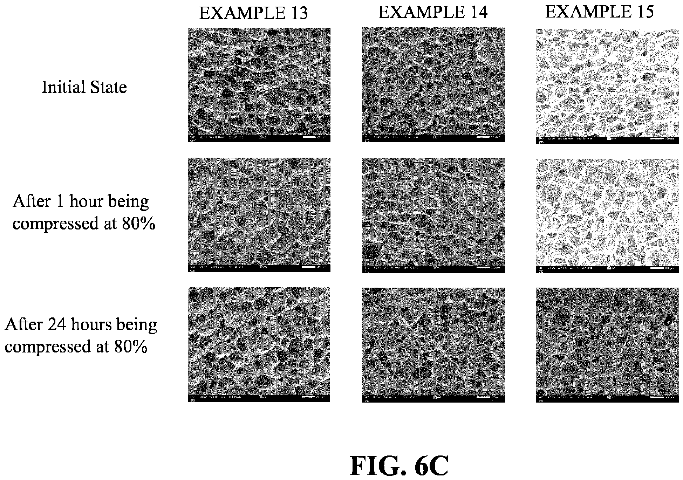

Surfactants such as Tween 20 or sodium dodecyl sulfate (SDS) increase viscosity of the cellulosic dispersion to facilitate foaming to take place. The use of Tween 20 is advantageous as the deformation upon compression at 80% is kept to minimum (EXAMPLES 13 to 15 and FIG 6C), in comparison to EXAMPLE 8, when SDS is used. Porous materials with the use of Tween 20 have density from 48 to 136 kg/m³, while the use of SDS provided porous materials with density from 22.5 to 36.5 kg/m³. EXAMPLE 15 provides a material with excellent resilience property (23.9%), with deformation upon compression at 80% is kept to a minimum (FIG. 5).

Resilience-enhancing modifiers such as glycerol and ethanol provide resilience properties of the composite that formed, as evident in EXAMPLE 8, 11 and 12.

Porous materials described in this invention have density and tensile strength comparable to polyurethane foam, and with higher compression strength and resilience.

The bio-based content based on the carbon content of the examples disclosed in this invention was 100% per EN 16785 standard.

### INDUSTRIAL APPLICABILITY

The biodegradability, renewability, and mechanical durability of the TOBNC-based foams of the present invention make them an ideal candidate for replacing petroleum-based foams. Furthermore, these materials align with global sustainability initiatives aimed at reducing plastic waste and promoting circular economies.

The resilient foams have mechanical properties comparable to commercial polyurethane foams (Comparative Example 16). As such, the applications of the present invention are similar to those of polyurethane foams including furniture/bedding, clothing, footwear, lingerie, and packaging. Specific applications for the present invention include:
Clothing and footwear padding and support structures such as foam bra cups
Protective packaging materials (replacing expanded polystyrene and polyurethane foams)
Biodegradable food trays and containers
Cushioning and insulation materials
Single-use packaging solutions for electronics and consumer goods

Several embodiments of the present disclosure and features of details are briefly described above. The embodiments described in the present disclosure may be easily used as a basis for designing or modifying other processes and structures for realizing the same or similar objectives and/or obtaining the same or similar advantages introduced in the embodiments of the present disclosure. Such equivalent construction does not depart from the spirit and scope of the present disclosure, and various variations, replacements, and modifications can be made without departing from the spirit and scope of the present disclosure.

As used herein, terms "approximately", "basically", "substantially", and "about" are used for describing and explaining a small variation. When being used in combination with an event or circumstance, the term may refer to a case in which the event or circumstance occurs precisely, and a case in which the event or circumstance occurs approximately. As used herein with respect to a given value or range, the term "about" generally means in the range of ±10%, ±5%, ±1%, or ±0.5% of the given value or range. The range may be indicated herein as from one endpoint to another endpoint or between two endpoints. Unless otherwise specified, all the ranges disclosed in the present disclosure include endpoints. The term "substantially coplanar" may refer to two surfaces within a few micrometers (µm) positioned along the same plane, for example, within 10 µm, within 5 µm, within 1 µm, or within 0.5 µm located along the same plane. When reference is made to "substantially" the same numerical value or characteristic, the term may refer to a value within ±10%, ±5%, ±1%, or ±0.5% of the average of the values.

## Claims

1. A resilient bacterial nanocellulose foam having at least 80 percent biobased carbon content comprising:
0.7% to 1.5% w/w TEMPO-oxidized bacterial nanocellulose and an anionic biopolymer;
0.3% to 0.9% w/w lactone-based void-forming agent;
0.1% to 2% w/w surfactant;
0.3% to 1.5 % w/w crosslinker selected from one or more divalent metal ion sources;
4% to 10% w/w of a resilience-enhancing modifier;
wherein the resilient bacterial nanocellulose foam has a density of 30 to 182 kg/m³, a tensile strength of 98 to 1195 kPa, and a resilience of 18 to 39% and the TEMPO-oxidized bacterial nanocellulose has a degree of polymerization (DP) of at least 700 in order to form dimensionally stable foam.

2. The resilient bacterial nanocellulose foam of claim 1, wherein the surfactant is selected from the group consisting of polysorbate-based surfactants, sodium dodecyl sulfate, and mixtures thereof.

3. The resilient bacterial nanocellulose foam of claim 1, wherein the resilience-enhancing modifier is sorbitol, mannitol, xylitol, glycerol, ethylene glycol, propylene glycol, polyethylene glycol or mixtures thereof.

4. The resilient bacterial nanocellulose foam of claim 1, wherein the TEMPO-oxidized bacterial nanocellulose comprises nanofibrils of 5 to 30 microns in length and average diameter of 30 to 50 nm.

5. The resilient bacterial nanocellulose foam of claim 1, wherein the TEMPO-oxidized bacterial nanocellulose comprises 36 to 60% cellulose in Iβ state.

6. The resilient bacterial nanocellulose foam of claim 1, wherein the anionic biopolymer is one or more of pectin, carboxy-methyl cellulose, xanthan gum, gellan gum, and sodium alginate.

7. The resilient bacterial nanocellulose foam of claim 1, wherein the one or more divalent metal ions is calcium ions, zinc ions, or mixtures thereof and the crosslinker is calcium carbonate, or zinc carbonate.

8. The resilient bacterial nanocellulose foam of claim 1, wherein the resilience-enhancing modifier is one or more of sorbitol, mannitol, xylitol, glycerol, ethylene glycol, propylene glycol, or polyethylene glycol, and wherein the resilience-enhancing modifier is mixed with alcohol.

9. A method for producing the resilient bacterial nanocellulose foam of claim 1, comprising:
preparing a dispersion comprising TEMPO-oxidized bacterial nanocellulose having a crystallinity of at least 75%, an anionic biopolymer, at least one surfactant, at least one crosslinker, and at least one resilience-enhancing modifier;
adding a void-forming agent to the dispersion to generate carbon dioxide and create a porous structure by mechanical agitation or gas expansion; and
ionically crosslinking the TEMPO-oxidized bacterial nanocellulose and the anionic biopolymer.

10. The method of claim 9, wherein the TEMPO-oxidized bacterial nanocellulose has a cellulose Iα to cellulose Iβ ratio between 40:60 and 65:35.

11. The method of claim 9, wherein the anionic biopolymer is sodium alginate having a viscosity in a range of 200-350 mPa·s in water.

12. The method of claim 9, wherein the void-forming agent is glucono-delta lactone.

13. The method of claim 12, wherein the crosslinking of the TEMPO-oxidized bacterial nanocellulose and the anionic biopolymer is by chelation of calcium ions from the calcium carbonate with carboxylate groups present on the TEMPO-oxidized bacterial nanocellulose and the anionic biopolymer.

14. The method of claim 10, wherein the resilient bacterial nanocellulose foam has a density of less than 182 kg/cm³.

15. The method of claim 10, wherein the biodegradable foam exhibits a tensile strength of at least 90 kPa and a compression strength of at least 0.5 MPa.
